# EUROPÄISCHE PATENTSCHRIFT

(11) **EP 4 230 987 B1**
(45) Veröffentlichungstag und Bekanntmachung des Hinweises auf die Patenterteilung: **03.01.2024**
(21) Anmeldenummer: 22157382.7
(22) Anmeldetag: 18.02.2022
(51) Int. Cl.: G01M 3/26

(54) **ERKENNUNG EINER ANOMALIE IN EINEM SYSTEM DER FLUIDTECHNIK**
ABNORMALITY DETECTION IN FLUID TECHNOLOGY SYSTEM
DÉTECTION D'UNE ANOMALIE DANS UN SYSTÈME DE LA TECHNIQUE DES FLUIDES

(43) Veröffentlichungstag der Anmeldung: 23.08.2023
(73) Patentinhaber: SICK AG, 79183 Waldkirch (DE)
(72) Erfinder: Weber, Thomas, 77960 Seelbach (DE); Sonntag, Dennis, 76571 Gaggenau (DE); Gaede, Raphael, Offenburg (DE)

(56) Entgegenhaltungen:
- WO-A1-2021/022315
- DE-A1-102010 043 482
- DE-T2- 69 516 858
- US-A1- 2001 003 286
- US-B1- 6 317 051

## Beschreibung

Die Erfindung betrifft eine Sensorvorrichtung und ein Verfahren zur Erkennung einer Anomalie in einem System der Fluidtechnik nach dem Oberbegriff von Anspruch 1 beziehungsweise 15.

Die Erzeugung und Aufbereitung von Druckluft trägt nicht unerheblich zum industriellen Strombedarf bei. Druckluft ist ein wichtiger und zugleich teurer Energieträger. Deshalb ist es wichtig, Anomalien in einem Druckluftsystem möglichst rasch zu entdecken, um den Energieverbrauch und die Betriebskosten effektiv zu deckeln. Eine Grundlage für die Vorgehensweise und Dokumentation bei der Bewertung der Energieeffizienz von Druckluftsystemen bietet die DIN EN ISO 11011:2015-08.

Es werden daher im Stand der Technik verschiedene Ansätze verfolgt, um Druckluftanlagen auf Anomalien und insbesondere Leckagen zu prüfen. Durch den Austritt von Druckluft aus einem geschlossenen System fällt der Druck im Inneren ab. Daher ist es möglich, wie beispielsweise in der DIN EN 13184:2001-07 beschrieben, ein geschlossenes pneumatisches System bekannten Volumens mit Druck zu beaufschlagen und, nach Erreichen eines thermischen Gleichgewichtszustands, den Druckabfall über einen gewissen Zeitraum zu messen. Über eine Veränderung gegenüber einem erwartbaren Druckabfall werden Leckagen zwar mit hoher Empfindlichkeit festgestellt, nicht jedoch lokalisiert. Dabei muss die Druckluftanlage für mehrere Stunden außer Betrieb genommen werden, und es lassen sich nur Zweige der Anlage prüfen, die im statischen Zustand auch unter Druck stehen. Andere Anomalien als Leckagen werden nicht erfasst.

Die DE 20 2019 210 600 B4 offenbart eine Diagnoseeinrichtung, die eine für die Druckregelung einer Druckkammer vorgesehene Ventilanordnung überwacht. Die Druckregelung sorgt dafür, dass ein Drucksollwert erreicht oder gehalten wird. Aus dem Druckregelungs-Stellsignal wird auf eine Druckfluid-Leckage geschlossen. Damit hängt sich die Diagnose gleichsam an die Druckregelung an. Es wird dabei nicht beschrieben, wie die Druckregelung das erforderliche Druckregelungs-Stellsignal gewinnt, und jedenfalls werden die Nachteile einer druckbasierten Anomalieerfassung nicht überwunden.

Ein anderer Ansatz, mit dem Leckagen in Druckluftsystemen auch lokalisiert werden, basiert auf der Messung von Ultraschall, der durch den Austritt von Gasen entsteht. Dafür bedarf es spezieller Messtechniken, die solchen Ultraschall aufspüren und für das menschliche Ohr hörbar machen. Ebenso wie Druckänderungsverfahren sind derartige Ultraschallmessungen aufwändig und zeitintensiv. Eine professionelle Leckageortung mit Ultraschalltechnik ist aus wirtschaftlicher Sicht nur sinnvoll, wenn im Vorfeld bereits bekannt ist, dass sich Leckagen im System befinden. Auch durch Ultraschall werden andere Anomalien als Leckagen nicht erfasst.

Es werden zwischenzeitlich Durchflussmesssensoren angeboten, die über eine integrierte Leckagedetektion verfügen. Diese Überwachung erfolgt in Phasen des Stillstands, der dann angenommen wird, wenn der gemessene Massenstrom unter einen ersten Schwellenwert fällt, wobei als eine Leckage erkannt wird, wenn im Stillstand immer noch ein Massenstrom erfasst wird, was mit einem zweiten Schwellenwert geprüft wird. Es ist ausgesprochen heikel, die Schwellenwerte richtig einzustellen, um einerseits den Stillstand bei einer größeren Leckage überhaupt noch zu erkennen und andererseits einen geringen Massenstrom im Regelbetrieb nicht mit einer Leckage zu verwechseln. Zudem werden Leckagen nur in Bauteilen detektiert werden, die im Stillstand mit Druckluft beaufschlagt sind, während es üblich ist, einen Großteil der Anlage im Stillstand drucklos zu schalten, der dann in der Leckagedetektion keine Berücksichtigung findet.

Im Stand der Technik werden auch Verfahren der künstlichen Intelligenz zur Auswertung von Sensordaten eingesetzt, um Anomalien in einem Druckluftsystem aufzudecken. Beispielsweise lernt ein neuronales Netz aus bekannten Daten den Zusammenhang zwischen Steuersignalen der Druckluftaktoren und dem zugehörigen Massenfluss, um dann nach Abschluss des Trainings die zu erwartende Durchflussmenge für zukünftige Prozessvorgänge vorherzusagen. Bei zu großer Diskrepanz zwischen gemessenem und vorhergesagtem Massenfluss wird auf eine Leckage geschlossen. Das funktioniert in einem jeweiligen konkreten Druckluftsystem recht gut, aber die Verallgemeinerung auf beliebige Anlagen ist schwierig und ein individuelles Training für das einzelne System meist zu aufwändig. Außerdem fehlt es vor Ort vielfach an der umfangreichen technischen Infrastruktur mit ausreichend Rechenleistung und Arbeitsspeicher, denn die Sensoren selbst verfügen typischerweise nicht über die Hardware, die Inferenzen oder gar das Training neuronaler Netze benötigen würden.

Ansätze zur Erkennung von Leckagen in Druckluftsystemen mit Methoden der künstlichen Intelligenz finden sich beispielsweise in den Arbeiten von Santolamazza, A., V. Cesarotti, und V. Introna, "Evaluation of machine learning techniques to enact energy consumption control of compressed air generation in production plants", 23rd Summer School" Francesco Turco" - Industrial Systems Engineering 2018, Vol. 2018, AIDI-Italian Association of Industrial Operations Professors, 2018 sowie von Desmet, Antoine und Matthew Delore, "Leak detection in compressed air systems using unsupervised anomaly detection techniques, " Annual Conference of the PHM Society, Vol. 9. No. 1. 2017.

In der DE 10 2020 100 347 A1 werden Durchflussanomalien in einem Reinigungssystem erkannt, indem Geräusche, die durch das Leiten von Flüssigkeiten verursacht werden, mit Mikrofonen aufgezeichnet und diese Toninformationen mit einem Bild des Reinigungssystems überlagert werden. Ergeben sich Geräusche an unerwarteten Orten, so wird dies auf eine Leckage zurückgeführt.

Die DE 10 2010 043 482 A1 offenbart eine Leckageerkennung in einem Versorgungsnetz, bei dem eine Zeitreihe jeweiliger minimaler Zuflüsse in ein Gebiet bestimmt wird. Falls der minimale Zufluss außerhalb eines ohne Leckage bestimmten Vertrauensbereichs liegt, wird eine Leckage angenommen und beispielsweise ein Alarm ausgelöst.

In der US 6 317 051 B1 wird ein Wasserfluss-Überwachungssystem vorgestellt. Es misst Größen wie die Zeit, in der Wasser fließt, oder die geflossene Wassermenge, und vergleicht das mit Referenzwerten, die nicht überschritten werden dürfen. Das wird noch mit Heuristiken kombiniert, beispielsweise werden die gemessenen Größen nochmals zurückgesetzt, wenn zwischenzeitlich wieder ein geringer Durchfluss gemessen wird.

Die US 2001/0003286 A1 befasst sich mit einem Steuervorrichtung zur Überflutungsvermeidung. Die Strömung wird unterbrochen, wenn sie über eine gewisse Zeitdauer hinaus anhält. Alternativ wird auf einen Moment gewartet, in dem nichts strömt, und dann die kumulierte Menge ab diesem Zeitpunkt gemessen, die nicht zu hoch werden darf.

Aus der DE 695 16 858 T2 ist eine Leckermittlung in einem hydraulischen System bekannt. Dabei wird eine Änderungsrate eines Füllstands in einem Druckmittel-Vorratsbehälter auswertet. Wird diese Änderungsrate zu hoch, so wird ein Leck angenommen.

Es ist daher Aufgabe der Erfindung, die Erkennung von Anomalien in einem gattungsgemäßen System zu verbessern.

Diese Aufgabe wird durch eine Sensorvorrichtung und ein Verfahren zur Erkennung einer Anomalie in einem System der Fluidtechnik nach Anspruch 1 beziehungsweise 15 gelöst. Fluidtechnik fasst die verschiedenen Verfahren zu Energieübertragung mittels Fluiden zusammen, insbesondere Pneumatik- oder Druckluftsysteme, wobei ein beliebiges Gas verwendet sein kann, und auch Hydrauliksysteme mit einer Hydraulikflüssigkeit anstelle von Luft. Mit Anomalien sind Leckagen, aber auch andere unerwünschte Zustände des überwachten Systems umfasst, wie zugesetzte Filter, geknickte Schläuche und dergleichen.

Mindestens ein Sensor bestimmt einen Messwert für die momentane Durchflussgeschwindigkeit in einer Leitung des Systems. Je nach Sensorprinzip kann sich der eigentliche Messwert von einer Durchflussgeschwindigkeit unterscheiden, ist jedoch in eine Durchflussgeschwindigkeit umrechenbar, sofern diese nicht schon direkt gemessen wird. Eine Steuer- und Auswertungseinheit stellt anhand mindestens eines solchen Messwerts fest, ob in dem System eine Anomalie vorliegt. Die Steuer- und Auswertungseinheit kann Teil des Sensors oder daran angeschlossen sein, etwa als speicherprogrammierbare Steuerung, Edge-Device, Cloud oder sonstige Rechenvorrichtung, oder über Sensor und angeschlossene Geräte verteilt implementiert sein.

Die Erfindung geht von dem Grundgedanken aus, eine Zeitreihe von Messwerten zu sammeln und mit einer Erwartung bei intaktem Zustand des Systems ohne Anomalien zu vergleichen. Die Zeitreihe bildet vorzugsweise eine unmittelbare Historie aller jüngsten Messwerte, die mit dem jeweils aktuellen Messwert endet, aber ausgedünnte Zeitreihen und/oder die Einbeziehung zumindest etwas länger zurückliegender Messwerte ist auch denkbar. Zunächst wird aus der Zeitreihe eine Periodendauer bestimmt, denn es wird angenommen, dass das System im Betrieb zyklisch eingesetzt ist, weil sich Bearbeitungs- und Produktionszyklen in der Praxis wiederholen.

Es werden dann eine einzelne Periode oder eine Vielzahl solcher Perioden ausgewertet, indem ein Abschnitt der Periodendauer aus der Zeitreihe oder mehrere solche Abschnitte betrachtet werden. Dazu werden eine oder mehrere Kenngrößen bestimmt, die insbesondere statistische Charakteristika der jeweiligen Periode wiedergeben. Diese mindestens eine Kenngröße wird mit einer jeweiligen zugehörigen Referenzkenngröße verglichen, d.h. einer Erwartung an die Kenngröße bei intaktem Zustand des Systems ohne Anomalien. Sofern das im Rahmen einer Toleranz nicht übereinstimmt, wird eine Anomalie angenommen. Die Toleranz ist vorzugsweise individuell je Kenngröße bestimmt, wie dies unten in verschiedenen Ausführungsformen beschrieben wird, kann aber alternativ auch als absolute oder relative Abweichung vorgegeben werden. Eine erkannte Anomalie wird vorzugsweise gemeldet, beispielsweise als Signal an eine übergeordnete Anlagensteuerung, eigene Anzeige, Warnung und/oder Wartungsaufforderung.

Die Erfindung hat den Vorteil, dass zuverlässig über das ganze System Anomalien erkannt werden. Es werden auch kleine Leckagen erfasst, die nur über einen kurzen Zeitraum wirksam sind. Bei herkömmlichen Auswertungen mit Schwellenwerten bleibt dies oft unentdeckt, weil eine globale Größe wie ein mittlerer oder maximaler Massenfluss kaum maßgeblich beeinflusst wird. Neben Leckagen werden auch andere Anomalien erfasst, die sich ebenfalls auf die Energieeffizienz und Funktionsfähigkeit des Systems auswirken, aber im Stand der Technik nicht erfasst werden. Solche Anomalien könnten auch die Qualität des Endprodukts beeinträchtigen, so dass die Erfindung zusätzlich zur Qualitätssicherung beiträgt. Dank der eigenständigen Bestimmung der Periodizität muss über den von dem System unterstützten Fertigungsprozesses keine Information kommuniziert werden, so dass eine tiefere Einbindung des Sensors an eine Anlagensteuerung nicht erforderlich ist. Durch den Verzicht auf Methoden der künstlichen Intelligenz bleiben auch die Hardwareanforderungen sehr gering.

Die Steuer- und Auswertungseinheit ist bevorzugt dafür ausgebildet, eine statistische Kenngröße der Verteilung von Durchflussgeschwindigkeiten über die Periodendauer zu bestimmen. Eine statistische Kenngröße hat den Vorteil, dass sich kleine transiente Abweichungen durch Messungenauigkeiten und dergleichen nur geringfügig darauf auswirken. Indem speziell die Verteilung der Durchflussgeschwindigkeiten statistisch ausgewertet wird, wird eine noch höhere Robustheit erzielt, weil es dafür auch nicht auf verschiedene zeitliche Abfolgen ankommt. Eine Analyse der Auftrittshäufigkeit der Messwerte innerhalb einer Periode koppelt die Messwerte von der Zeit ab. Dadurch sind auch keine Zeitstempel der Messwerte erforderlich. Wie in allen Ausführungsformen ist die Referenzkenngröße passend zu wählen, hier also ebenfalls eine statistische Kenngröße der Verteilung von Durchflussgeschwindigkeiten des intakten Systems. Ebenfalls wie in allen Ausführungsformen kann genau eine Periode oder können mehrere Perioden bewertet werden.

Die Steuer- und Auswertungseinheit ist bevorzugt dafür ausgebildet, ein Histogramm der Durchflussgeschwindigkeiten über die Periodendauer zu bilden, wobei mindestens eine Kenngröße aus der Anzahl in einem Bin des Histogramms bestimmt wird. Das Histogramm ist eine Diskretisierung der Verteilung der gemessenen Durchflussgeschwindigkeiten und dadurch besonders einfach handhabbar. Als Kenngröße kann die Anzahl in einem der Bins des Histogramms verwendet werden, vorzugsweise werden mehrere solche Kenngrößen für mehrere oder alle Bins bestimmt. Erneut wird die Referenzkenngröße vorzugsweise analog bestimmt, nämlich aus einem Histogramm, das bei intaktem System ohne Anomalien aufgezeichnet wird.

Die Steuer- und Auswertungseinheit ist bevorzugt dafür ausgebildet, den kumulierten Unterschied der Messwerte der Zeitreihe zu einer Referenzzeitreihe zu bestimmen. Auch dieser Auswertung kann über genau eine Periode oder über mehrere Perioden erfolgen. Die Referenzzeitreihe entspricht Messwerten des intakten Systems ohne Anomalien. In dieser Ausführungsform ist gleichsam jeder Messwert selbst eine Kenngröße, während die Referenzzeitreihe die zugehörigen Referenzkenngrößen liefert. Durch eine später beschriebene Auflösungsverringerung der Zeitreihe kann die Anzahl der Kenngrößen verringert werden. Die punktweise bestimmten Unterschiede zwischen der Zeitreihe der Messwerte und der Referenzzeitreihe können auch als Differenzfläche zwischen einer Messkurve und einer Referenzmesskurve über eine Periode oder über mehrere gemittelte Perioden verstanden werden. Rechnerisch entspricht es dem Integral des Betrags der Differenz von Messkurve und Referenzmesskurve.

Die Steuer- und Auswertungseinheit ist bevorzugt dafür ausgebildet, die Zeitreihe von Messwerten im Betrieb des Systems zu erfassen und auszuwerten. Die Anomalieerkennung erfolgt also online beziehungsweise im Regelbetrieb, ein Abschalten oder Pausieren der Anlage ist nicht erforderlich. Das ist ein Unterschied zu vielen der einleitend beschriebenen Verfahren des Standes der Technik, in denen nur im Stillstand des Systems Anomalien erfassbar sind oder dafür gar ein besonderer Zustand beispielsweise hinsichtlich des Drucks in dem System eingestellt werden muss.

Die Steuer- und Auswertungseinheit ist bevorzugt dafür ausgebildet, die Periodendauer durch Berechnen einer Autokorrelation, Fouriertransformierten oder betragmäßiger Differenzen der Zeitreihe zu bestimmen. In der Autokorrelation beziehungsweise im zugehörigen Spektrum der Zeitreihe zeigen sich Peaks entsprechend der Periodizität. Derartige Verfahren zum Bestimmen der Periodendauer einer Zeitreihe sind an sich bekannt, werden aber bislang nicht für die Erkennung von Anomalien in einem System der Fluidtechnik eingesetzt. Eine bevorzugte Ausführungsform der Bestimmung der Autokorrelation ist die Bildung kumulierter Beträge der Differenzen der gegen sich verschobenen Zeitreihe, wobei das Intervall der Verschiebung iterativ erhöht wird. Trägt man die Summe der Betragsdifferenzen nun über die Verschiebungen auf, erhält man Extremstellen bei der Periodendauer und ihren Vielfachen. In den herkömmlichen Verfahren wie einleitend beschrieben wäre die Periodendauer nicht von Interesse.

Die Steuer- und Auswertungseinheit ist bevorzugt dafür ausgebildet, einen gegenseitigen zeitlichen Versatz von Abschnitten der Periodendauer zu erkennen und zu korrigieren. Die einzelnen Arbeitszyklen in dem System haben zwar grundsätzlich die Periodendauer, aber es kann immer wiederzu kleineren zeitlichen Verschiebungen kommen. Solche Schwankungen oder Phasenverschiebungen zwischen den Perioden könnten die Erfassung von Anomalien verfälschen, und daher ist es vorteilhaft, den zeitlichen Versatz auszugleichen. Die auszuwertenden Abschnitte sind dann so zueinander ausgerichtet, dass die Verläufe möglichst ähnlich übereinanderliegen. Das gelingt beispielsweise durch die Berechnung paarweiser Korrelationen der Abschnitte.

Die Steuer- und Auswertungseinheit ist bevorzugt dafür ausgebildet, die Zeitreihe von Messwerten in eine Zeitreihe mit geringerer zeitlicher Auflösung umzurechnen. Nach einer solchen Auflösungsverringerung ("Downsampling") kann die weitere Auswertung mit weniger Aufwand durchgeführt werden. Im einfachsten Fall wird schlicht nur jeder i-te Messwert behalten, vorzugsweise gefolgt von einer Glättung oder Tiefpassfilterung. Ebenso sind komplexere Interpolationen mit dann beliebigem Zeitskalierungsfaktor denkbar. Weiterhin ist denkbar, die verringerte Auflösung nur einem Teil der Schritte zugrundezulegen und für andere Schritte mit der vollen Auflösung zu arbeiten. Beispielsweise kann die Bestimmung der Periodendauer und eine Korrektur eines gegenseitigen Phasenversatzes von Abschnitten der Periodendauer bei voller Auflösung erfolgen, die Kenngrößen werden dann aber nach einer Auflösungsverringerung bestimmt.

Die Steuer- und Auswertungseinheit ist bevorzugt für einen Einlernmodus ausgebildet, in dem eine Zeitreihe von Messwerten erfasst und ausgewertet wird, daraus eine Periodendauer bestimmt wird, für mindestens einen Abschnitt der Zeitreihe der Periodendauer mindestens eine Kenngröße bestimmt und die Kenngröße als Referenzkenngröße gespeichert wird. In dem Einlernmodus werden also die Referenzkenngrößen gewonnen, und deshalb sollte dies in einer Phase erfolgen, in der sichergestellt ist, dass keine Anomalien vorliegen. Bereits im Einlernmodus vorhandene Anomalien werden später nicht erkannt, sondern als ordnungsgemäß angesehen. Das Verfahren, mit dem die Referenzkenngrößen bestimmt werden, entspricht im Prinzip demjenigen für die Bestimmung von Kenngrößen während des eigentlichen Betriebs wie oben beschrieben. Es entfällt der Vergleich, da beim Einlernen die Situation erfasst werden soll, wie sie ist. Dank des Einlernmodus ist eine flexible und einfach zu handhabende Anpassung an neue Systeme und Prozesse möglich.

In dem Einlernmodus wird vorzugsweise eine jeweilige Kenngröße mehrfach über verschiedene Abschnitte bestimmt, um ein statistisches Maß als Referenzkenngröße und/oder ein Fluktuationsmaß als Toleranz zu der gespeicherten Referenzkenngröße zu bestimmen. Über ein solches statistisches Einlernen unter Betrachtung mehrerer Perioden kann neben einer robusten Erwartung auch die passende Toleranz eingelernt werden. Als statistisches Maß eignet sich beispielsweise ein Mittelwert, ein Schwerpunkt, ein Median oder ein anderes Quantil. Das statistische Maß kann sich auf bereits gewonnene Zwischenergebnisse wie die Bins eines Histogramms beziehen. Dadurch wird eine Erwartung festgelegt. Das Fluktuationsmaß, beispielsweise die Varianz, Standardabweichung, ein höheres Moment oder Kombinationen beziehungsweise Vielfache davon, bestimmt die zugehörige Toleranz für diese Erwartung. Die Einstellung fester Schwellenwerte wie teilweise im Stand der Technik entfällt.

In dem Einlernmodus wird bevorzugt ein Histogramm der Durchflussgeschwindigkeiten über die Periodendauer gebildet, wobei die Referenzkenngröße aus einer Anzahl in einem Bin des Histogramms und/oder die zugehörige Toleranz aus einem Fluktuationsmaß der Anzahl in einem Bin bestimmt wird. Eine Bestimmung von Kenngrößen und Referenzkenngrößen über Histogramme ist besonders einfach und führt zugleich zu einer sehr verlässlichen Anomalieerkennung. Es wird eine Erwartung an einzelne Bins, mehrere Bins oder alle Bins aufgestellt und im Betrieb dagegen geprüft. Dabei entspricht die Erwartung dem statistischen Maß, wie einem Mittelwert, der Anzahl in dem jeweiligen Bin, über die Auswertung mehrerer Perioden, während die Toleranz durch das Fluktuationsmaß gegeben ist, beispielsweise ein Vielfaches der Standardabweichung der in dem Bin über die verschiedenen Perioden bestimmten Anzahlen.

Die Steuer- und Auswertungseinheit ist bevorzugt dafür ausgebildet, bei einer Veränderung der Periodendauer vorübergehend in den Einlernmodus umzuschalten. In dieser Ausführungsform erkennt die Sensorvorrichtung selbstständig an einer neuen Periodendauer und damit einem anderen Bearbeitungs- oder Prozesszyklus, wenn sich der beobachtete Prozess ändert. Das wird dann nicht als Anomalie verstanden, sondern als gewollte Umstellung, und die Referenzgrößen werden neu und passend eingelernt. Mit den neuen Referenzgrößen kann die Sensorvorrichtung anschließend den geänderten Prozess auf Anomalien überwachen. Die neue Periodendauer sollte allerdings stabil sein, ansonsten wird dies vorzugsweise doch als Anomalie angesehen. Das selbständige Umstellen kann mit einer Warnung verbunden werden und gegebenenfalls auch eine Bestätigung angefordert werden, dass tatsächlich eine gewollte Umstellung stattgefunden hat.

Die Steuer- und Auswertungseinheit ist bevorzugt dafür ausgebildet, zwischen mehreren Sätzen mit mindestens einer Referenzgröße umzuschalten. Damit ist die Sensorvorrichtung auf verschiedene Prozesse des Systems vorbereitet. Durch Verwendung des jeweils passenden Satzes mit mindestens einer Referenzgröße, vorzugsweise einschließlich einer zugehörigen Toleranz, werden in dem jeweils aktiven Prozess Anomalien erkannt.

Die Steuer- und Auswertungseinheit ist bevorzugt in den Sensor integriert. Die Sensorvorrichtung ist dann der Sensor, beziehungsweise es handelt sich um einen intelligenten Sensor mit integrierter Anomalieerkennung. Es bedarf dann keiner weiteren technischen Infrastruktur, um das System auf Anomalien zu prüfen. Alternativ kann die Steuer- und Auswertungseinheit über mehrere Sensoren verteilt implementiert sein, oder es gibt mindestens einen intelligenten Sensor mit eigener Auswertung und mindestens einen weiteren angeschlossenen Sensor, der lediglich Messwerte liefert, und beliebige Mischformen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Systems der Fluidtechnik mit einem Sensor zu dessen Anomalieüberwachung;
- Fig. 2: ein beispielhaftes Ablaufschema für das Einlernen einer Erwartung an das System ohne Anomalien;
- Fig. 3: eine Darstellung einer beispielhaften Zeitreihe von Messwerten des Durchflusses des Systems ohne Anomalien;
- Fig. 4: eine nach Perioden aufgeteilte Darstellung der Zeitreihe gemäß Figur 3;
- Fig. 5: ein Histogramm der über eine jeweilige Periode gemäß Figur 4 auftretenden Häufigkeiten von Durchflüssen;
- Fig. 6: eine aus mehreren Histogrammen über jeweilige Perioden entsprechend Figur 5 bestimmte Erwartung an die Anzahl je Bin mit Toleranzbereich;
- Fig. 7: ein beispielhaftes Ablaufschema für die Überprüfung des Systems auf Anomalien;
- Fig. 8: eine Darstellung einer beispielhaften Zeitreihe von Messwerten des Durchflusses des überwachten Systems;
- Fig. 9: eine nach Perioden aufgeteilte Darstellung der Zeitreihe gemäß Figur 8;
- Fig. 10: ein Histogramm der über eine jeweilige Periode gemäß Figur 9 auftretenden Häufigkeiten von Durchflüssen;
- Fig. 11: das Ergebnis eines Vergleichs der auftretenden Häufigkeiten in dem Histogramm gemäß Figur 10 mit den Erwartungen gemäß Figur 6;
- Fig. 12: eine vergleichende Darstellung zweier Zeitreihen in einem System mit Anomalie und ohne Anomalie;
- Fig. 13: eine überlagerte Darstellung mehrerer Zeitreihen gemessener Durchflüsse zu Illustration der Bestimmung einer repräsentativen Periode;
- Fig. 14: eine gesonderte Darstellung der gemäß Figur 13 bestimmten repräsentativen Periode mit Toleranzband; und
- Fig. 15: eine Illustration einer weiteren Auswertung zur Erkennung von Anomalien durch Bestimmung einer Differenzfläche zwischen einer Periode von Messwerten in einem System mit Anomalie und ohne Anomalie.

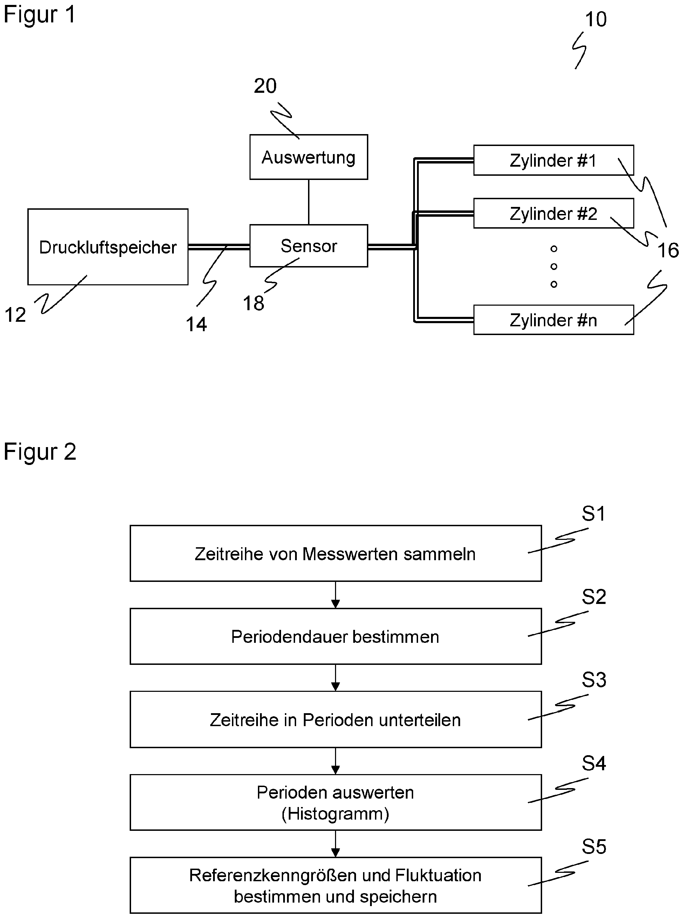

Figur 1 zeigt eine schematische Übersichtsdarstellung eines Systems 10 der Fluidtechnik. Es ist in dem gezeigten Beispiel als Druckluftsystem ausgestaltet, die Erfindung umfasst jedoch ebenso andere Systeme der Fluidtechnik, insbesondere neben Pneumatiksystemen auch Hydrauliksysteme.

Ein Druckluftspeicher 12 versorgt über Leitungen 14 verschiedene Verbraucher mit Druckluft, gezeigt sind rein beispielhaft mehrere Arbeitszylinder 16. An der Leitung 14 ist ein Sensor 18 angeordnet, der die Durchflussgeschwindigkeit der Druckluft misst. Diese Messung dient üblicherweise der nicht gezeigten Anlagensteuerung für allgemeine Überwachungs- und Steuerungsaufgaben des Systems 10. Erfindungsgemäß werden die Messdaten des Sensors 18 für eine Anomalieüberwachung genutzt, wobei dies sowohl Haupt- wie Nebenzweck für das Anbringen des Sensors 18 sein kann. In der Praxis kann die Anlage noch sehr viel verzweigter und komplexer sein, und für eine Anomalieüberwachung können mehrere Sensoren an verschiedenen Stellen der Leitung 14 angeordnet werden.

Der Sensor 18 kann für die Durchflussmessung ein beliebiges Messprinzip verwirklichen, insbesondere ein Coriolis-Sensor, ein magnetisch-induktiver Durchflusssensor für ein anderes Fluid als Luft mit einer Mindestleitfähigkeit, ein Ultraschall-Durchflusssensor oder ein Vortex-Sensor sein. Es muss auch nicht unmittelbar die Durchflussgeschwindigkeit gemessen werden, solange sich aus der Messung die Durchflussgeschwindigkeit oder eine dazu äquivalente Messgröße wie der Massenstrom ableiten lässt, wie etwa bei einer Druckdifferenzmessung. Der Sensor 18 wird bevorzugt möglichst nah an den Verbrauchern beziehungsweise Arbeitszylindern 16 eingebaut, denn dann bleibt das effektiv überwachte Volumen klein, so dass Veränderungen durch Anomalien mit hoher Empfindlichkeit erfasst werden.

An den Sensor 18 angeschlossen, oder abweichend von der Darstellung darin integriert, ist eine Steuer- und Auswertungseinheit 20 vorgesehen, in der die Messdaten des Sensors 18 ausgewertet werden, um zu erkennen, ob das System 10 wie erwartet arbeitet oder ob dort eine Anomalie vorliegt. Im Falle einer erkannten Anomalie kann der Sensor 18 dies anzeigen oder eine entsprechende Mitteilung an eine nicht gezeigte übergeordnete Steuerung des Systems 10 übermitteln. Eine Anomalie ist in erster Linie eine Leckage, aber es sind auch andere Anomalien wie ein zugesetztes Filter oder eine geknickte Leitung 14 möglich. Das Verfahren zum Erkennen einer Anomalie wird nun unter Bezugnahme auf die weiteren Figuren erläutert.

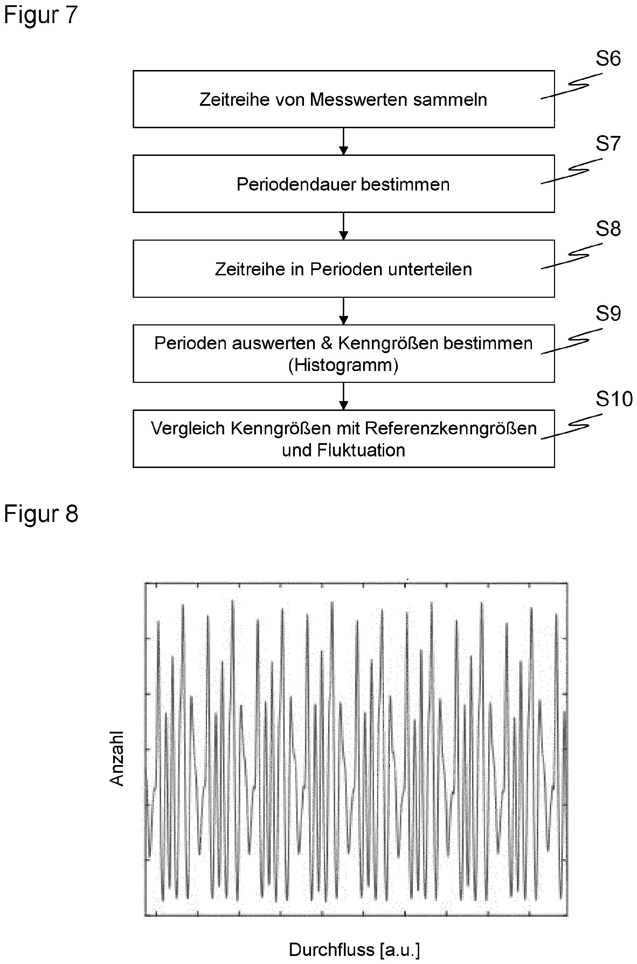

Figur 2 zeigt ein beispielhaftes Ablaufschema für das Einlernen einer Referenz oder Erwartung an das System 10 ohne Anomalien. Mit dieser Erwartung kann dann im Betrieb verglichen werden, wie später unter Bezugnahme auf die Figur 7 beschrieben, um aus signifikanten Abweichungen auf eine Anomalie zu schließen. Während des Einlernens wird von einem anomaliefreien System 10 ausgegangen, beziehungsweise zu diesem Zeitpunkt bereits vorliegende Anomalien können später auch nicht aufgedeckt werden.

Das erfindungsgemäße Vorgehen basiert auf der Annahme, dass die Prozesse in dem System 10 periodisch ablaufen und sich folglich nach einer bestimmten Periodendauer wiederholen. Diese Periodizität zeigt sich dann entsprechend in den Messwerten des Sensors 18. Diese Annahme ist in der Praxis regelmäßig erfüllt. Beispielsweise wird Druckluft bei der Herstellung eines bestimmten Bauteils zur Handhabung des Werkstücks sowie dem Wechsel von Werkzeugen eingesetzt, wobei der Zyklus mit jedem weiteren Bauteil von Neuem beginnt.

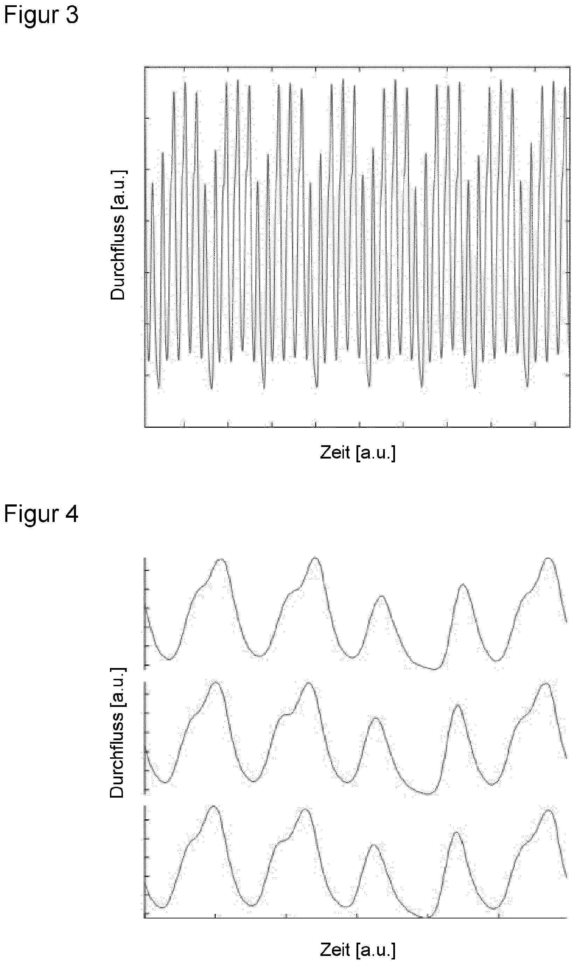

In einem Schritt S1 wird eine Zeitreihe von Messwerten des Sensors 18 für die jeweilige Durchflussgeschwindigkeit in einem Zwischenspeicher gesammelt. Diese Zeitreihe bildet das Eingangssignal für den einzulernenden anomaliefreien Fall, und in Figur 3 ist ein Beispiel gezeigt. Die Phase, in der Messwerte gesammelt werden, ist ausreichend lang gewählt, damit die Zeitreihe mehrere Zyklen oder Perioden des zu überwachenden Prozesses des Systems 10 umfasst.

In einem Schritt S2 wird aus der Zeitreihe deren Periodendauer bestimmt. Verfahren zur Bestimmung der Periodendauer einer Zeitreihe sind an sich bekannt und beruhen beispielsweise auf einer Autokorrelation oder Fouriertransformation. Um die Komplexität des Problems zu reduzieren, kann zuvor die Auslösung der Zeitreihe reduziert werden ("Downsampling").

In einem Schritt S3 wird die Zeitreihe in Abschnitte oder Perioden der Periodendauer unterteilt. Figur 4 zeigt drei dieser Perioden der insgesamt dem bloßen Auge nach acht Perioden umfassenden Zeitreihe gemäß Figur 3 einzeln übereinander. Die Ähnlichkeit über die Perioden ist deutlich erkennbar und lässt es bereits plausibel erscheinen, dass signifikante Abweichungen aufgrund von Anomalien erfassbar sein werden.

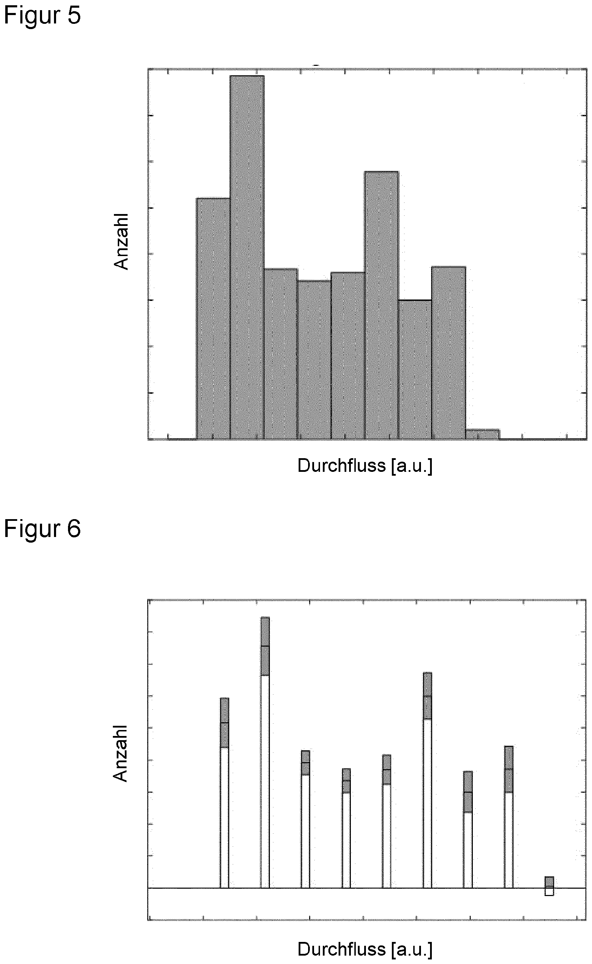

In einem Schritt S4 wird eine einzelne der Perioden gemäß Figur 4 statistisch ausgewertet. In einer bevorzugten Ausführungsform wird dafür ein Histogramm der Auftrittshäufigkeit der jeweiligen Durchflussgeschwindigkeiten oder Massenströme gebildet, wie beispielhaft in Figur 5 für eine der Perioden gemäß Figur 4 gezeigt. Die möglichen Durchflussgeschwindigkeiten oder Massenströme werden dazu in Intervalle beziehungsweise Bins unterteilt, vorzugsweise in gleichmäßige Bins, und auf der X-Achse aufgetragen, wobei auf der Y-Achse für jedes Bin gezählt wird, wie oft ein passender Messwert gemessen wurde. Ein derartiges Histogramm wird vorzugsweise wiederholt für zumindest einige oder bevorzugt alle Perioden der Zeitreihe erzeugt. Ein Histogramm ist ein besonders geeignetes statistisches Werkzeug, es sind aber auch andere Kenngrößen denkbar, mit denen sich der Verlauf der Messwerte in einem Abschnitt gemäß Figur 4 beschreiben lässt.

In einem Schritt S5 werden aus den Anzahlen (Counts) in den einander entsprechenden Bins der Histogramme zu verschiedenen Perioden statistische Maße berechnet, insbesondere ein Mittelwert und eine Standardabweichung der jeweiligen Anzahl. Daraus ergibt sich eine Erwartung an die Verteilung der Durchflussgeschwindigkeiten oder Massenströme samt einer Toleranz. Der Toleranzbereich kann durch einen Korridor um den Mittelwert im Abstand von mehreren, beispielsweise drei Standardabweichungen nach oben und unten festgelegt werden. Figur6 zeigt die resultierenden Referenzgrößen durch kleine schwarze Querstriche beim Mittelwert der Bins sowie den grau hinterlegten zugehörigen Toleranzbereich.

Figur 7 zeigt ein beispielhaftes Ablaufschema, mit dem durch Vergleich einer im Betrieb aufgezeichneten Zeitreihe von Messwerten mit den eingelernten Referenzgrößen und zugehörigen Toleranzen Anomalien in dem System 10 festgestellt werden können. Die Abläufe gemäß Figur 2 und 7 sind ähnlich, denn die jeweiligen Zeitreihen von Messwerten aus dem Betrieb werden ähnlich aufbereitet wie beim Einlernen, um Kenngrößen zu gewinnen, die mit den Referenzkenngrößen verglichen werden können. Es geht aber im Ablauf gemäß Figur 2 um das Einlernen von Referenzkenngrößen bei unterstellter Anomaliefreiheit des Systems 10, wobei die Referenzkenngrößen nicht bewertet, sondern als Erwartung gespeichert werden. Nun im Ablauf gemäß Figur 7 werden Kenngrößen bei unbekanntem Zustand des Systems 10 gewonnen und mit den Referenzkenngrößen verglichen.

In einem Schritt S6 wird eine Zeitreihe von Messwerten des Sensors 18 für die jeweilige Durchflussgeschwindigkeit in einem Zwischenspeicher gesammelt. Diese Zeitreihe bildet das Eingangssignal, und in Figur 8 ist ein Beispiel gezeigt. Für diese Zeitreihe ist im Gegensatz zu derjenigen gemäß Figur 3 nicht vorab bekannt, ob es in dem System 10 Anomalien gibt oder nicht. Die Phase, in der Messwerte für die Zeitreihe gesammelt werden, ist ausreichend lang gewählt, um zumindest eine Periode, vorzugsweise mehrere Perioden des zu überwachenden Prozesses des Systems 10 zu umfassen.

In einem Schritt S7 wird aus der Zeitreihe deren Periodendauer bestimmt. Für das Vorgehen wird auf Schritt S2 gemäß Figur 2 verwiesen, wobei insbesondere das identische Verfahren angewandt werden kann. Die Periodendauer ist im Übrigen aus dem Einlernen bekannt, so dass Schritt S7 optional ist. Andererseits kann es sinnvoll sein, die Periodendauer tatsächlich auf die aktuelle Zeitreihe zu beziehen, um Schwankungen aufzufangen, oder auch als Plausibilitätsprüfung, denn eine stärkere Abweichung zwischen der während des Einlemens und der im Betrieb bestimmten Periodendauer deutet schon für sich auf eine Anomalie oder wenigstens eine Verletzung der Annahme eines stabilen periodischen Prozesses in dem System 10 hin. Wird im Schritt S7 wiederholt und für sich stabil eine andere Periodendauer bestimmt als während des Einlernens im Schritt S2, so kann dies auch daran liegen, dass der Prozess im System 10 umgestellt wurde, ohne erneut Referenzkenngrößen einzulernen.

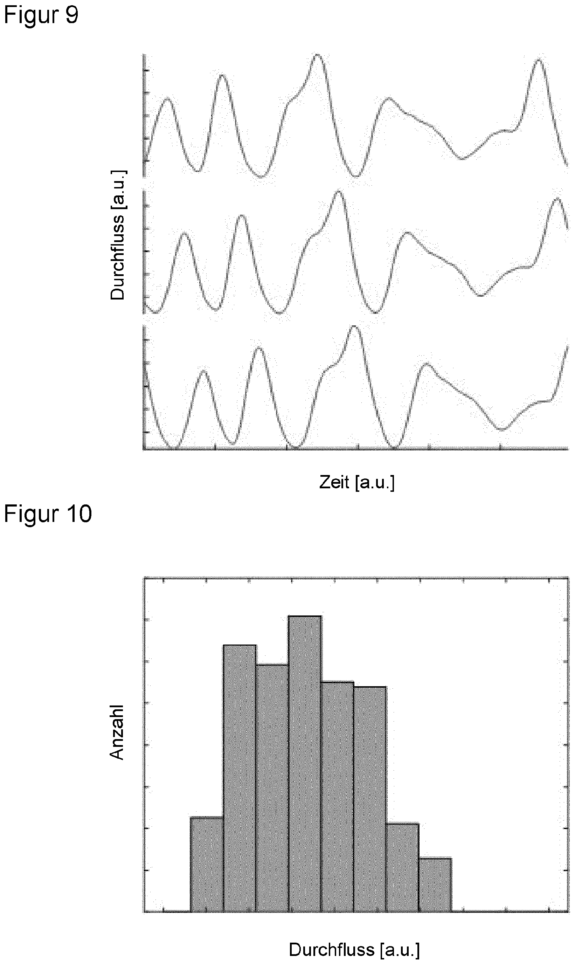

In einem Schritt S8 wird analog zu Schritt S3 die Zeitreihe in Abschnitte oder Perioden der Periodendauer unterteilt. Figur 9 zeigt drei dieser Perioden der Zeitreihe gemäß Figur 8 einzeln übereinander. Mit dem bloßen Auge ist durch Vergleich mit Figur 4 bereits zu vermuten, dass eine Anomalie vorliegt.

In einem Schritt S9 wird analog zu Schritt S4 eine einzelne Periode gemäß Figur 9 statistisch ausgewertet. Dazu wird in einer bevorzugten Ausführungsform ein Histogramm der Auftrittshäufigkeit der jeweiligen Durchflussgeschwindigkeiten oder Massenströme gebildet, wie beispielhaft in Figur 10 für eine der Perioden gemäß Figur 9 gezeigt. Das Histogramm kann aus einer oder mehreren Perioden gebildet werden. Bei Verwendung mehrerer Perioden wird vorzugsweise eine Normierung vorgenommen, um die aus dem Histogramm gewonnenen Kenngrößen, insbesondere die Anzahlen in den Bins, mit den Referenzgrößen vergleichen zu können. Das Verfahren zur Erkennung von Anomalien reagiert bei Verwendung mehrerer Perioden etwas träger, mit allen diesbezüglichen Vor- und Nachteilen. Ein Histogramm ist ein besonders geeignetes statistisches Werkzeug, es sind aber auch andere Kenngrößen denkbar, mit denen sich der Verlauf der Messwerte in einem Abschnitt gemäß Figur 9 beschreiben lässt.

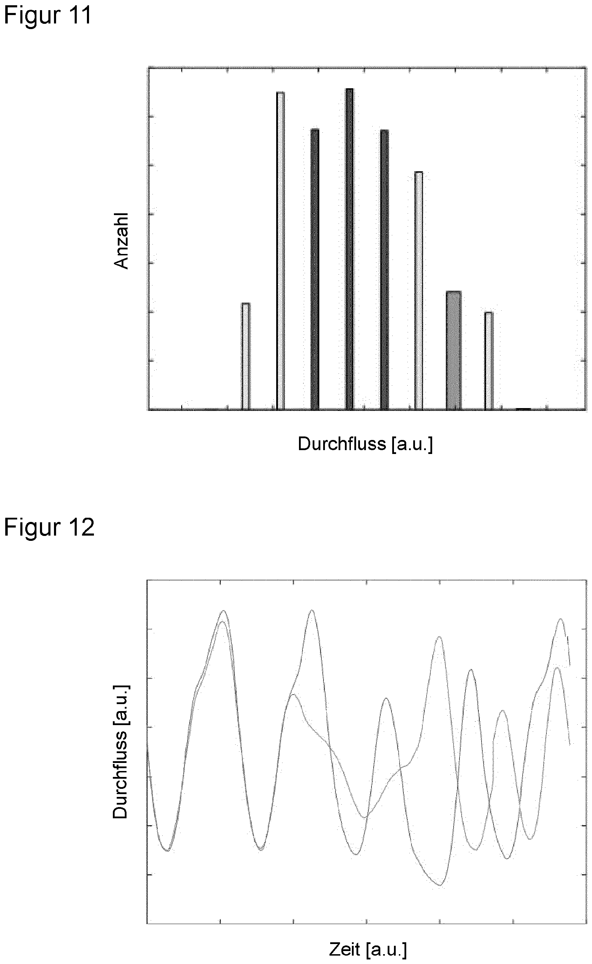

In einem Schritt S10 werden die im Schritt S9 gewonnenen Kenngrößen mit den Referenzgrößen verglichen. Unterschiede innerhalb der zugehörigen Toleranzen werden noch hingenommen, aus einer stärkeren Veränderung wird auf eine Anomalie geschlossen. In Figur 11 ist das Ergebnis eines Vergleichs des Histogramms gemäß Figur 10 aus einer Periode aktueller Messwerte mit den Erwartungen gemäß Figur 6 gezeigt. Die Höhe der gezeigten Balken entspricht den gemessenen Kenngrößen entsprechend Figur 10, aber die Balken weisen unterschiedliche Grauwerte je nach Vergleichsergebnis auf. Bei dem grauen vorletzten Balken lag der Vergleich innerhalb der Toleranz. Die hellen Balken hingegen ergaben einen Unterschied nach unten, die schwarzen Balken einen Unterschied nach oben jeweils außerhalb derToleranz. Die mittlere Verteilung der Messwerte innerhalb der betrachteten Periode oder Perioden ist folglich in diesem Beispiel so stark verändert, dass eine Anomalie angenommen wird; andernfalls hätten sämtliche Balken wie der vorletzte graue Balken eine Lage innerhalb der Toleranz anzeigen müssen. Dabei wäre noch eine zusätzliche zusammenfassende Toleranz vorstellbar, die für ein Bin oder einen gewissen Prozentsatz der Bins eine auch für sich signifikante Abweichung zulässt, ohne eine Anomalie anzuzeigen.

Figur 12 zeigt eine vergleichende Darstellung einer jeweiligen Periode gemäß Figur 4 in einem System 10 ohne Anomalie und gemäß Figur 9 in einem zu prüfenden System 10. Offensichtlich kommt die beschriebene Auswertung der Kenngrößen im Vergleich zu den Referenzgrößen in dem erläuterten Beispiel zu dem richtigen Schluss, denn hier liegt erkennbar eine Anomalie vor.

Die beschriebene Erkennung von Anomalien basiert auf einer Auswertung mittels Histogrammen. Die Zeitreihe einer Periode oder mehrere Perioden kann auch auf andere Weise ausgewertet werden, etwa durch Kastengrafiken, Säulendiagramme oder Quantil-Quantil-Plots. Als statistisches Maß kann anstelle des Mittelwerts ein Median oder ein anderes Quantil verwendet werden, ebenso können Fluktuationen statt über die Standardabweichung durch Quantile oder höhere Momente wiedergegeben werden. Eine weitere Alternative ist es, pro Bin des Histogramms ein IIR-Filter mit Tiefpasscharakteristik und geeigneter Zeitkonstante zu wählen, um die Häufigkeit der Messwerte in der Klasse näherungsweise zu schätzen. Dabei wird beim Auftreten eines neuen Messwerts ein neuer Zyklus aller IIR-Filter ausgeführt. Dabei ist der Eingangswert des jeweiligen IIR-Filters "0", sofern der Messwert nicht in dessen Bin gehört, und sonst "1".

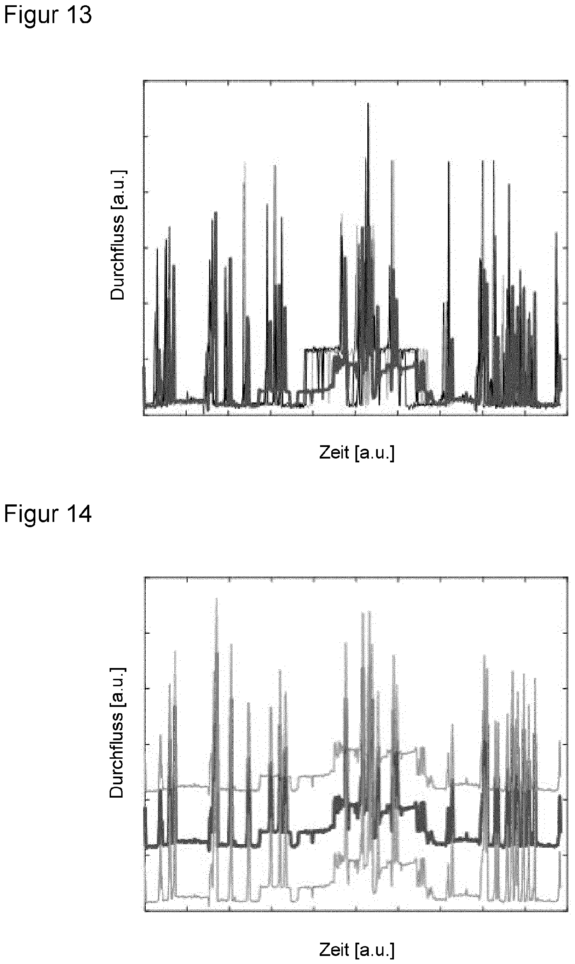

In einer weiteren Alternative kann sich die Auswertung auf eine repräsentative Periode stützen. Diese repräsentative Periode kann berechnet werden, indem bei allen Perioden zunächst die Phasenverschiebung eliminiert wird, so dass die einzelnen Perioden möglichst kongruent zueinander sind. Anschließend kann für jeden Zeitpunkt innerhalb einer Periode der Mittelwert sowie die Standardabweichung der entsprechenden Messwerte gebildet werden. Auf Basis der Standardabweichung kann dann für jeden Zeitpunkt eine Toleranz angegeben werden. Figur 13 illustriert eine repräsentative Periode innerhalb der Messwerte der ursprünglichen Perioden. Figur 14 zeigt eine gesonderte Darstellung der repräsentativen Periode samt über die Standardabweichung definiertem Toleranzband. Die einzelnen Punkte bilden die Referenzkenngrößen, und im Betrieb wird eine Periode damit verglichen, die überall oder zu einem definierten Anteil innerhalb des Toleranzbandes liegen muss. Die während des Betriebs bestimmte Periode kann ebenfalls als repräsentative Periode aus mehreren Perioden gebildet sein.

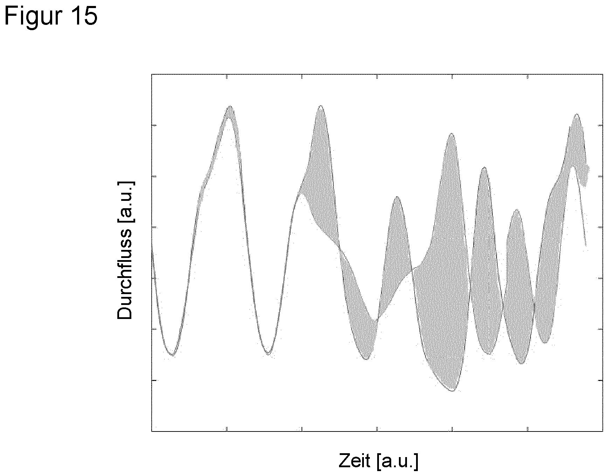

Figur 15 illustriert nochmals eine weitere Alternative, die darauf basiert, die Fläche zwischen einer eingelernten Periode und einer während des Betriebs zur Erkennung von Anomalien erfassten Periode zu bestimmen. Vorzugsweise handelt es sich um eine Fläche zwischen repräsentativen Perioden. Rechnerisch entspricht die Fläche dem Integral über den Betrag der Differenz. Die resultierende Fläche sollte klein bleiben, beispielsweise gemessen als Anteil an dem Integral einer der Perioden selbst.

Ein jeweiliges Einlernen von Referenzkenngrößen bezieht sich auf einen bestimmten zyklischen Prozess in dem System 10. Da sich industrielle Fertigungsprozesse immer wieder ändern, beispielsweise durch Formatwechsel, Änderung des Produkts oder Wechsel der Produkte, ist es wichtig, dass der Sensor 18 durch ein einfaches Einlernen reagieren kann. Vorzugsweise wird dem Sensor 18 mitgeteilt, welches Produkt künftig produziert wird, so dass das Einlernen ausgelöst wird. Der Sensor 18 kann sich auch eine Datenbank von Referenzkenngrößen zu den diversen Produktvarianten aufbauen und im Falle eines schon bekannten Prozesses einfach umschalten statt neu einzulernen.

Hat der Sensor 18 keine Kenntnis über den Fertigungsprozess, kann der Sensor 18 sich auch selbständig vorübergehend in den Einlernmodus versetzen und nach Erfassung von Referenzgrößen in die Erkennung von Anomalien übergehen, beziehungsweise nach und nach eine Sammlung aus Referenzgrößen aufbauen. Das Entscheidungsmerkmal, ob ein anderer Prozess stattfindet, sind die selbst ermittelten Periodendauern. So kann der Sensor 18 bei einer schon bekannten Periodendauer auf früher ermittelte Referenzgrößen zurückgreifen oder andernfalls selbsttätig die erforderlichen Referenzgrößen einlernen.

In einer Erweiterung des beschriebenen Vorgehens wird nicht nur festgestellt, dass eine Anomalie vorliegt, sondern es werden auch Anomalien unterschieden. Dazu sind entsprechend feiner differenzierende Referenzkenngrößen einzulernen. In Kenntnis der Struktur des Systems 10, etwa durch Schaltbilder, Schaltsignale oder Funktionsdiagramme, besteht außerdem die Möglichkeit, detektierte Anomalien zu lokalisieren.

## Patentansprüche

1. Sensorvorrichtung (18, 20) zur Erkennung einer Anomalie in einem System (10) der Fluidtechnik mit mindestens einem periodisch ablaufenden Prozess, wobei die Sensorvorrichtung (18, 20) mindestens einen Sensor (18) zum Bestimmen eines Messwerts für die momentane Durchflussgeschwindigkeit in einer Leitung (14) des Systems (10) sowie eine Steuer- und Auswertungseinheit (20) aufweist, die dafür ausgebildet ist, eine Zeitreihe von Messwerten auszuwerten und anhand mindestens eines Messwerts festzustellen, ob eine Anomalie vorliegt,
**dadurch gekennzeichnet,**
**dass** die Steuer- und Auswertungseinheit (20) dafür ausgebildet ist, zunächst aus der Zeitreihe eine Periodendauer eines Zyklus des zu überwachenden mindestens einen periodisch ablaufenden Prozesses zu bestimmen, einen Abschnitt der Zeitreihe der Periodendauer oder mehrere Abschnitte der Periodendauer zu betrachten und dazu mindestens eine Kenngröße zu bestimmen, die Kenngröße mit einer Referenzkenngröße zu vergleichen und bei Abweichung um mehr als eine Toleranz das Vorliegen einer Anomalie festzustellen.

2. Sensorvorrichtung (18, 20) nach Anspruch 1,
wobei die Steuer- und Auswertungseinheit (20) dafür ausgebildet ist, eine statistische Kenngröße der Verteilung von Durchflussgeschwindigkeiten über die Periodendauer zu bestimmen.

3. Sensorvorrichtung (18, 20) nach Anspruch 1 oder 2,
wobei die Steuer- und Auswertungseinheit (20) dafür ausgebildet ist, ein Histogramm der Durchflussgeschwindigkeiten über die Periodendauer zu bilden, wobei mindestens eine Kenngröße aus der Anzahl in einem Bin des Histogramms bestimmt wird.

4. Sensorvorrichtung (18, 20) nach einem der vorhergehenden Ansprüche,
wobei die Steuer- und Auswertungseinheit (20) dafür ausgebildet ist, den kumulierten Unterschied der Messwerte der Zeitreihe zu einer Referenzzeitreihe zu bestimmen.

5. Sensorvorrichtung (18, 20) nach einem der vorhergehenden Ansprüche, wobei die Steuer- und Auswertungseinheit (20) dafür ausgebildet ist, die Zeitreihe von Messwerten im Betrieb des Systems (10) zu erfassen und auszuwerten.

6. Sensorvorrichtung (18, 20) nach einem der vorhergehenden Ansprüche, wobei die Steuer- und Auswertungseinheit (20) dafür ausgebildet ist, die Periodendauer durch Berechnen einer Autokorrelation, Fouriertransformation oder betragmäßiger Differenzen der Zeitreihe zu bestimmen.

7. Sensorvorrichtung (18, 20) nach einem der vorhergehenden Ansprüche, wobei die Steuer- und Auswertungseinheit (20) dafür ausgebildet ist, einen gegenseitigen zeitlichen Versatz von Abschnitten der Periodendauer zu erkennen und zu korrigieren.

8. Sensorvorrichtung (18, 20) nach einem der vorhergehenden Ansprüche, wobei die Steuer- und Auswertungseinheit (20) dafür ausgebildet ist, die Zeitreihe von Messwerten in eine Zeitreihe mit geringerer zeitlicher Auflösung umzurechnen.

9. Sensorvorrichtung (18, 20) nach einem der vorhergehenden Ansprüche, wobei die Steuer- und Auswertungseinheit (20) für einen Einlernmodus ausgebildet ist, in dem eine Zeitreihe von Messwerten erfasst und ausgewertet wird, daraus eine Periodendauer bestimmt wird, für mindestens einen Abschnitt der Zeitreihe der Periodendauer mindestens eine Kenngröße bestimmt und die Kenngröße als Referenzkenngröße gespeichert wird.

10. Sensorvorrichtung (18, 20) nach Anspruch 9,
wobei in dem Einlernmodus eine jeweilige Kenngröße mehrfach über verschiedene Abschnitte bestimmt wird, um ein statistisches Maß als Referenzkenngröße und/oder ein Fluktuationsmaß als Toleranz zu der gespeicherten Referenzkenngröße zu bestimmen.

11. Sensorvorrichtung (18, 20) nach Anspruch 9 oder 10,
wobei in dem Einlernmodus ein Histogramm der Durchflussgeschwindigkeiten über die Periodendauer gebildet wird, wobei die Referenzkenngröße aus einer Anzahl in einem Bin des Histogramms und/oder die zugehörige Toleranz aus einem Fluktuationsmaß der Anzahl in einem Bin bestimmt wird.

12. Sensorvorrichtung (18, 20) nach einem der Ansprüche 9 bis 11,
wobei die Steuer- und Auswertungseinheit (20) dafür ausgebildet ist, bei einer Veränderung der Periodendauer vorübergehend in den Einlernmodus umzuschalten.

13. Sensorvorrichtung (18, 20) nach einem der vorhergehenden Ansprüche, wobei die Steuer- und Auswertungseinheit (20) dafür ausgebildet ist, zwischen mehreren Sätzen mit mindestens einer Referenzgröße umzuschalten.

14. Sensorvorrichtung (18, 20) nach einem der vorhergehenden Ansprüche, wobei die Steuer- und Auswertungseinheit (20) in den Sensor (18) integriert ist.

15. Verfahren zur Erkennung einer Anomalie in einem System (10) der Fluidtechnik mit mindestens einem periodisch ablaufenden Prozess, wobei mindestens ein Sensor (18) einen jeweiligen Messwert für die momentane Durchflussgeschwindigkeit in einer Leitung (14) des Systems (10) bestimmt, eine Zeitreihe von Messwerten ausgewertet und anhand mindestens eines Messwerts festgestellt wird, ob eine Anomalie vorliegt,
**dadurch gekennzeichnet,**
**dass** zunächst aus der Zeitreihe eine Periodendauer eines Zyklus des zu überwachenden mindestens einen periodisch ablaufenden Prozesses bestimmt wird, ein Abschnitt der Zeitreihe der Periodendauer oder mehrere Abschnitte der Periodendauer betrachtet werden und dazu mindestens eine Kenngröße bestimmt wird, die Kenngröße mit einer Referenzkenngröße verglichen wird und bei Abweichung um mehr als eine Toleranz das Vorliegen einer Anomalie festgestellt wird.

## Claims

1. A sensor device (18, 20) for detecting an anomaly in a fluid power system (10) having at least one periodically running process, the sensor device (18, 20) comprising at least one sensor (18) for determining a measured value for the instantaneous flow rate in a line (14) of the system (10) and a control and evaluation unit (20) configured to evaluate a time series of measured values and to determine whether an anomaly is present on the basis of at least one measured value,
**characterized in that** the control and evaluation unit (20) is configured to first determine from the time series a period duration of a cycle of the at least one periodically running process to be monitored, to consider a section of the time series of the period duration or a plurality of sections of the period duration and to determine at least one characteristic variable for this purpose, to compare the characteristic variable with a reference characteristic variable and, in the case of deviation by more than a tolerance, to determine the presence of an anomaly.

2. The sensor device (18, 20) according to claim 1,
wherein the control and evaluation unit (20) is configured to determine a statistical characteristic variable of the distribution of flow rates over the period duration.

3. The sensor device (18, 20) according to claim 1 or 2,
wherein the control and evaluation unit (20) is configured to form a histogram of the flow velocities over the period duration, wherein at least one characteristic variable is determined from the count in one bin of the histogram.

4. The sensor device (18, 20) according to any of the preceding claims,
wherein the control and evaluation unit (20) is configured to determine the cumulative difference of the measured values of the time series from a reference time series.

5. The sensor device (18, 20) according to any of the preceding claims,
wherein the control and evaluation unit (20) is configured to detect and evaluate the time series of measured values during operation of the system (10).

6. The sensor device (18, 20) according to any of the preceding claims,
wherein the control and evaluation unit (20) is configured to determine the period duration by calculating an autocorrelation, Fourier transformation or magnitude differences of the time series.

7. The sensor device (18, 20) according to any of the preceding claims,
wherein the control and evaluation unit (20) is configured to detect and correct a mutual time offset of sections of the period duration.

8. The sensor device (18, 20) according to any of the preceding claims,
wherein the control and evaluation unit (20) is configured to convert the time series of measured values into a time series with lower temporal resolution.

9. The sensor device (18, 20) according to any of the preceding claims,
wherein the control and evaluation unit (20) is configured for a teach-in mode in which a time series of measured values is detected and evaluated, a period duration is determined therefrom, at least one characteristic variable is determined for at least one section of the time series of the period duration, and the characteristic variable is stored as a reference characteristic variable.

10. The sensor device (18, 20) according to claim 9,
wherein in the teach-in mode a respective characteristic variable is determined a plurality of times over different sections in order to determine a statistical measure as reference characteristic variable and/or a fluctuation measure as a tolerance to the stored reference characteristic variable.

11. The sensor device (18, 20) according to claim 9 or 10,
wherein, in the teach-in mode, a histogram of the flow rates is formed over the period, the reference characteristic being determined from a count in a bin of the histogram and/or the associated tolerance being determined from a fluctuation measure of the count in a bin.

12. The sensor device (18, 20) according to any of claims 9 to 11,
wherein the control and evaluation unit (20) is configured to switch temporarily to the teach-in mode in the event of a change in the period duration.

13. The sensor device (18, 20) according to any of the preceding claims,
wherein the control and evaluation unit (20) is configured to switch between a plurality of sets with at least one reference variable.

14. The sensor device (18, 20) according to any of the preceding claims,
wherein the control and evaluation unit (20) is integrated in the sensor (18).

15. A method for detecting an anomaly in a fluid power system (10) having at least one periodically running process, wherein at least one sensor (18) determines a respective measured value for the instantaneous flow rate in a line (14) of the system (10), a time series of measured values is evaluated and it is determined whether an anomaly is present on the basis of at least one measured value,
**characterized in that** first of all a period duration of a cycle of the at least one periodically running process to be monitored is determined from the time series, a section of the time series of the period duration or a plurality of sections of the period duration are considered and at least one characteristic variable is determined for this purpose, the characteristic variable is compared with a reference characteristic variable and, in the case of deviation by more than a tolerance, the presence of an anomaly is determined.

## Revendications

1. Dispositif de détection (18, 20) pour détecter une anomalie dans un système (10) de la technique des fluides avec au moins un processus qui se déroule périodiquement, le dispositif de détection (18, 20) comprenant au moins un capteur (18) pour déterminer une valeur de mesure de la vitesse d'écoulement momentanée dans une conduite (14) du système (10), ainsi qu'une unité de commande et d'évaluation (20) conçue pour évaluer une série chronologique de valeurs de mesure et pour constater, à l'aide d'au moins une valeur de mesure, s'il y a une anomalie,
**caractérisé en ce que**
l'unité de commande et d'évaluation (20) est conçue pour déterminer tout d'abord une durée de la période d'un cycle dudit au moins un processus à surveiller, se déroulant périodiquement, pour observer une section de la série chronologique de la durée de période ou plusieurs sections de la durée de période, et pour déterminer au moins une grandeur caractéristique, pour comparer la grandeur caractéristique à une grandeur caractéristique de référence et pour constater la présence d'une anomalie en cas d'écart supérieur à une tolérance.

2. Dispositif de détection (18, 20) selon la revendication 1,
dans lequel l'unité de commande et d'évaluation (20) est conçue pour déterminer une grandeur caractéristique statistique de la répartition des vitesses d'écoulement sur la durée de la période.

3. Dispositif de détection (18, 20) selon la revendication 1 ou 2,
dans lequel l'unité de commande et d'évaluation (20) est conçue pour former un histogramme des vitesses d'écoulement sur la durée de la période, au moins une grandeur caractéristique étant déterminée à partir du nombre dans un bin de l'histogramme.

4. Dispositif de détection (18, 20) selon l'une des revendications précédentes, dans lequel l'unité de commande et d'évaluation (20) est conçue pour déterminer la différence cumulée des valeurs de mesure de la série chronologique par rapport à une série chronologique de référence.

5. Dispositif de détection (18, 20) selon l'une des revendications précédentes, dans lequel l'unité de commande et d'évaluation (20) est conçue pour enregistrer et évaluer la série chronologique de valeurs de mesure pendant le fonctionnement du système (10).

6. Dispositif de détection (18, 20) selon l'une des revendications précédentes, dans lequel l'unité de commande et d'évaluation (20) est conçue pour déterminer la durée de la période en calculant une autocorrélation, une transformation de Fourier ou des différences en valeur absolue de la série chronologique.

7. Dispositif de détection (18, 20) selon l'une des revendications précédentes, dans lequel l'unité de commande et d'évaluation (20) est conçue pour détecter et corriger un décalage temporel mutuel de sections de la durée de la période.

8. Dispositif de détection (18, 20) selon l'une des revendications précédentes, dans lequel l'unité de commande et d'évaluation (20) est conçue pour convertir la série chronologique de valeurs de mesure en une série chronologique avec une résolution temporelle plus faible.

9. Dispositif de détection (18, 20) selon l'une des revendications précédentes, dans lequel l'unité de commande et d'évaluation (20) est conçue pour un mode d'apprentissage dans lequel une série chronologique de valeurs de mesure est enregistrée et évaluée, une durée de la période est déterminée à partir de celle-ci, au moins une grandeur caractéristique est déterminée pour au moins une section de la série chronologique de la durée de période, et la grandeur caractéristique est mémorisée comme grandeur caractéristique de référence.

10. Dispositif de détection (18, 20) selon la revendication 9,
dans lequel, dans le mode d'apprentissage, une grandeur caractéristique respective est déterminée plusieurs fois sur différentes sections afin de déterminer une mesure statistique comme grandeur caractéristique de référence et/ou une mesure de fluctuation comme tolérance par rapport à la grandeur caractéristique de référence mémorisée.

11. Dispositif de détection (18, 20) selon la revendication 9 ou 10,
dans lequel, dans le mode d'apprentissage, un histogramme des vitesses d'écoulement est formé sur la durée de la période, la caractéristique de référence étant déterminée à partir d'un nombre dans un bin de l'histogramme, et/ou la tolérance associée étant déterminée à partir d'une mesure de fluctuation du nombre dans un bin.

12. Dispositif de détection (18, 20) selon l'une des revendications 9 à 11, dans lequel l'unité de commande et d'évaluation (20) est conçue pour passer temporairement en mode d'apprentissage en cas de modification de la durée de la période.

13. Dispositif de détection (18, 20) selon l'une des revendications précédentes, dans lequel l'unité de commande et d'évaluation (20) est conçue pour commuter entre plusieurs ensembles comprenant au moins une grandeur de référence.

14. Dispositif de détection (18, 20) selon l'une des revendications précédentes, dans lequel l'unité de commande et d'évaluation (20) est intégrée au capteur (18).

15. Procédé de détection d'une anomalie dans un système (10) de la technique des fluides avec au moins un processus qui se déroule périodiquement, dans lequel au moins un capteur (18) détermine une valeur de mesure respective de la vitesse d'écoulement momentanée dans une conduite (14) du système (10), et une série chronologique de valeurs de mesure est évaluée, afin de constater, à l'aide d'au moins une valeur de mesure, s'il y a une anomalie,
**caractérisé en ce que**
tout d'abord une durée de la période d'un cycle dudit au moins un processus à surveiller, se déroulant périodiquement, est déterminée à partir de la série chronologique, une section de la série chronologique de la durée de période ou plusieurs sections de la durée de la période sont observées, et au moins une grandeur caractéristique est déterminée, la grandeur caractéristique est comparée à une grandeur caractéristique de référence et, en cas d'écart supérieur à une tolérance, la présence d'une anomalie est constatée.
